(19) Europäisches Patentamt
European Patent Office
Office européen des brevets

(11) Veröffentlichungsnummer: **0 075 772**
**B1**

(12) **EUROPÄISCHE PATENTSCHRIFT**

(45) Veröffentlichungstag der Patentschrift: **08.01.86**

(51) Int. Cl.⁴: **C 08 G 63/62**, C 08 G 63/68

(21) Anmeldenummer: **82108393.8**

(22) Anmeldetag: **11.09.82**

(54) **Verfahren zur Isolierung von Polycarbonaten auf Basis von 4,4-Dihydroxidiphenylsulfonen.**

(30) Priorität: **25.09.81 DE 3138179**

(43) Veröffentlichungstag der Anmeldung: **06.04.83 Patentblatt 83/14**

(45) Bekanntmachung des Hinweises auf die Patenterteilung: **08.01.86 Patentblatt 86/2**

(84) Benannte Vertragsstaaten: **DE FR GB IT NL**

(56) Entgegenhaltungen:
**EP - A - 0 000 547**
**DE - A - 2 500 092**
**DE - A - 2 721 596**
**US - A - 3 271 364**

(73) Patentinhaber: **BAYER AG, Konzernverwaltung RP Patentabteilung, D-5090 Leverkusen 1 Bayerwerk (DE)**

(72) Erfinder: **Käfer, Peter, Dr., Bodelschwinghstrasse 18, D-4150 Krefeld (DE)**
Erfinder: **Morbitzer, Leo, Dr., Rungestrasse 50, D-5000 Köln 80 (DE)**
Erfinder: **Neuray, Dieter, Dr., Sebastian-Kneipp-Weg 6, D-4150 Krefeld (DE)**
Erfinder: **Cohnen, Wolfgang, Dr., Heymannstrasse 36, D-5090 Leverkusen (DE)**
Erfinder: **Nouvertné, Werner, Dr., Scheiblerstrasse 95, D-4150 Krefeld (DE)**

**EP 0 075 772 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist ein Verfahren zur Isolierung von Polycarbonaten mit 18 bis 45 Mol-%, vorzugsweise 22–40 Mol-%, an Struktureinheiten der Formel Ia

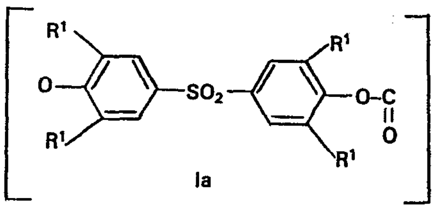

Ia

mit $R^1$ = H oder $C_1$–$C_3$-Alkyl, bezogen auf die Summe an Polycarbonatstruktureinheiten der Formeln I + Ia,

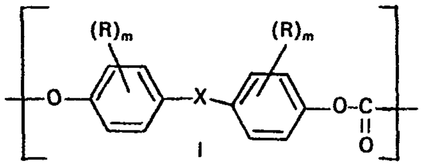

I

wobei in I

X eine Bindung, $C_1$–$C_8$-Alkylen, $C_2$–$C_8$-Alkyliden, Cyclohexylen, Cyclohexyliden, S, O oder CO

R Wasserstoff, Chlor, Brom, Alkylsubstituenten mit 1 bis 3 C-Atomen

m 0, 1, 2 bedeuten, indem man 18 bis 45 Mol-%, vorzugsweise 22–40 Mol-% Sulfonbisphenole der Formel IIA

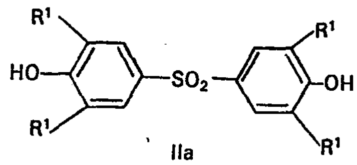

IIa

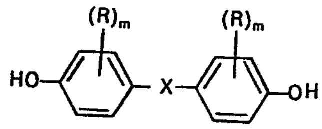

II

mit 82 bis 55, vorzugsweise 78 bis 60 Mol-% an Bisphenolen der Formel II, bezogen jeweils auf die gesamte Molmenge der eingesetzten Bisphenole IIa + II, nach dem Phasengrenzflächenverfahren umsetzt, dadurch gekennzeichnet, dass man die Bisphenole der Formel II durch Phosgenierung im Phasengemisch aus wässriger alkalischer Phase und inerter organischer Phase zu einem Chlorkohlensäureesterendgruppen enthaltendem Oligocarbonat phosgeniert und anschliessend mit den Sulfonbisphenolen der Formel IIa unter Aminkatalyse polymerisiert, nach beendeter Polykondensation die Phasen in einem bekannten Scheidegefäss trennt und die organische Phase mit Phosphorsäure und Wasser in der üblichen Weise neutral wäscht, und nach abermaliger Trennung der Phasen die Sulfonbisphenolpolycarbonate durch Fällung oder Verdampfen des organischen Lösungsmittels isoliert.

Die Bedeutung für $R^1$, R, X und m in den Formeln II und IIa entspricht der in den Formeln I und Ia.

Die Herstellung von sulfonhaltigen Polycarbonaten ist seit langem bekannt (siehe US-PS 3 271 367 (Ue 1695), DE-AS 1 007 996 (Ue 1695), US-PS 3 271 364, US-PS 3 312 659, US-PS 3 312 662 und US-PS 3 419 526 (Le A 10 078).

Sofern bei diesem Verfahren die Methode der Phasengrenzflächenpolykondensation angesprochen ist, ergeben sich bei Gehalten von über 15 Mol-% an Sulfonbisphenolen Probleme mit der Phasentrennung und Isolierung der hergestellten Sulfonpolycarbonate. Dies trifft auch zu, wenn man die Bis-chlorkohlensäureester der Sulfonbisphenole im Phasengrenzflächenverfahren einsetzt (siehe beispielsweise US-PS 3 271 367).

Somit musste man entweder auf wasserfreie Verfahren ausweichen (siehe US-PS 3 312 659 bzw. US-PS 3 312 662) oder konnte de facto etwa nur 15 Mol-% an Sulfonbisphenolen maximal kokondensieren (siehe beispielsweise US-PS 3 912 688 (Le A 13 804) und EP-A-547 (Mo 1741-EP)).

In US-PS 3 974 126 bzw. FR-PS 2 235 150 wird ein kontinuierliches Verfahren zur Herstellung von Polycarbonaten nach dem Phasengrenzflächenverfahren beschrieben, wobei Chlorkohlensäureester von Oligocarbonaten mit Diphenolen unter speziellen Reaktionsbedingungen umgesetzt werden. Bis-(4-hydroxyphenyl)-sulfon kann als eines von mehreren Diphenolen sowohl in Form des Oligocarbonats als auch als Diphenolkomponente an der Reaktion beteiligt werden. Konkrete Ausführungsbeispiele unter Einbeziehung des Sulfonbisphenols sind in der US-PS 3 974 126 nicht enthalten.

Überraschenderweise zeigte sich nun, dass der erfindungsgemässe Vorteil der leichten Isolierung der Sulfonbisphenolpolycarbonate nur eintritt, wenn man die Bisphenole der Formel II und nicht etwa das Sulfonbisphenol vorab in Oligocarbonate überführt. Dieser selektive Befund war in Anbetracht der Lehre der US-PS 3 974 126 überraschend.

Die erfindungsgemässen Sulfon-Copolycarbonate zeichnen sich durch eine hervorragende Benzinbeständigkeit, eine hohe Wärmeformbeständigkeit und gute mechanische Eigenschaften aus.

Gerade der Bereich von 18–45 Mol-% an Sulfoneinheiten ist von technischem Interesse, da sich die positiven Effekte, die durch die Sulfongruppe bewirkt werden, z.B. hohe Wärmeformbeständigkeit und gutes Spannungsrissverhalten gegenüber Benzin, deutlich bemerkbar machen, während die bei höheren Sulfongehalten deutlich werdenden Nachteile, z.B. Hydrolyseinstabilität

und schlechteres Fliessverhalten, sich noch nicht nachteilig auswirken.

Die so hergestellten Copolycarbonate haben ein mittleres Gewichtsmittel-Molekulargewicht $M_w$ von 10.000 bis 200.000 bevorzugt 20.000 bis 80.000 und weisen die Strukturformel:

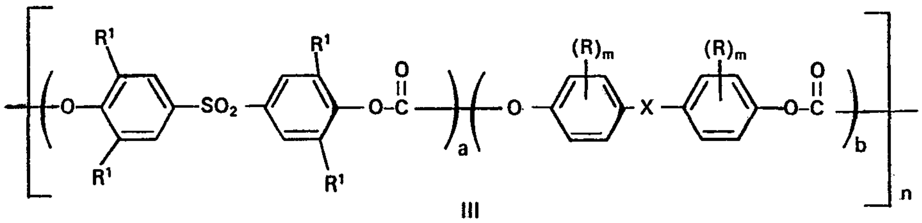

III

auf, wobei X, R, $R^1$ und m die für I bzw. Ia angegebene Bedeutung haben, das Verhältnis b:a etwa 4,5:1 bis 1,2:1 betragen kann und n Werte von 5–160 annehmen kann.

Die zur Herstellung der Copolycarbonate der Formel III geeigneten Bisphenole der Formel II sind 4,4-Dihydroxydiphenyle, bis-(4-hydroxyphenyl)-$C_1$–$C_8$-alkane, Bis-(4-hydroxyphenyl)-cyclohexane, Bis-(4-hydroxyphenyl)-sulfide, -ether und -ketone sowie kern-($C_1$–$C_3$)-alkylierte und/oder kernbromierte und/oder kernchlorierte Verbindungen.

Diese und weitere geeignete Bisphenole II sind z.B. in den US-Patentschriften 3 028 365, 2 999 835, 3 148 172, 2 991 273, 3 271 367 und 2 999 846, in den Deutschen Offenlegungsschriften 1 570 703, 2 063 050, 2 063 052, 2 211 956, 2 211 957, der Französischen Patentschrift 1 561 518 und in der Monographie «H. Schnell, Chemistry and Physics of Polycarbonates, Interscience Publishers, New York, 1964» beschrieben.

Bevorzugte Bisphenole der Formel II sind z.B.:

2,2-Bis(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis(4-hydroxyphenyl)-cyclohexan
1,1-Bis-(4-hydroxyphenyl)-propan und
1,1-Bis-(4-hydroxyphenyl)-butan.

Ganz besonders bevorzugt ist 2,2-Bis-(4-hydroxyphenyl)-propan. Geeignetes und zugleich bevorzugtes Sulfonbisphenol der Formel IIa ist Bis-(4-hydroxyphenyl)-sulfon.

Die Polycarbonate können darüber hinaus durch den Einbau geringer Mengen, vorzugsweise von Mengen zwischen 0,05 und 2,0 Mol-% (bezogen auf eingesetzte Diphenole), an drei- und mehr als dreifunktionellen Verbindungen, insbesondere solchen mit drei oder mehr als drei phenolischen Hydroxygruppen verzweigt sein.

Polycarbonate dieser Art sind z.B. in den Deutschen Offenlegungsschriften 1 570 533, 1 595 762, 2 116 974, 2 113 347, 2 500 092 der Britischen Patentschrift 1 079 821 und der US-Patentschrift 3 544 514 beschrieben.

Die Bedingungen des Phasengrenzflächenverfahrens sind beispielsweise aus «Schnell, loc-cit.» bekannt. Bevorzugte Lösungsmittel sind Chlorbenzol und $CH_2Cl_2$ sowie deren Mischungen.

Als Aminkatalysatoren sind die üblichen wie z.B. Triethylamin oder N-Methyl-piperidin geeignet; als Kettenabbrecher sind ebenfalls die üblichen wie z.B. (Alkyl und/oder Halogen) Phenole geeignet. Reaktionstemperaturen, = zeiten, = drücke sowie Basizität des Reaktionsmediums sind in üblicher Weise einzustellen. Die einzusetzende Phosgenmenge liegt vorzugsweise bei 1,2 bis ca. 2 Mol, pro Molsumme II + IIa.

Die primär herzustellenden Chlorkohlensäureester der Bisphenole II haben mittlere Polymerisationsgrade von bis 1–8 der Struktureinheiten I und sind in bekannter Weise herstellbar.

Die Phasentrennung erfolgt in den für die Herstellung von Bisphenol-A-homopolycarbonaten verwendeten üblichen Scheidegefässen, die dem Fachmann geläufig sind.

Die Isolierung der Sulfonbisphenolpolycarbonte durch Fällung erfolgt mittels Petrolether, Alkanen, Methanol oder Aceton als Fällungsmitteln.

Das Verdampfen des Lösungsmittels kann in üblicher Weise mittels bekannten Ausdampfextrudern erfolgen.

Somit bereitet die Gewinnung Reinigung und Aufarbeitung der organischen Polycarbonat-haltigen Phase keine Schwierigkeiten. Die Sulfonbisphenolpolycarbonate können als Granulat, Folie oder Strang isoliert und gewonnen werden.

Die Copolycarbonate werden überall dort als Formkörper eingesetzt, wo hohe Temperaturbeständigkeit und ein gutes Spannungsrissverhalten, insbesondere gegenüber Benzin, gefordert wird.

Wie üblich, können den erfindungsgemässen Polycarbonaten Zusatzstoffe aller Art während oder nach dem Herstellungsvorgang zugegeben werden. Erwähnt seien in diesem Zusammenhang beispielsweise Farbstoffe, Pigmente, Entformungsmittel, Stabilisatoren gegen Feuchtigkeit-, Hitze- und UV-Einwirkung, Gleitmittel, Füllstoffe, wie Glaspulver, Quarzerzeugnisse, Graphit, Molybdänsulfid, Metallpulver, Pulver höherschmelzender Kunststoffe, z.B. Polytetrafluorethylenpulver, natürliche Fasern, wie Baumwolle, Sisal und Asbest, ferner Glasfasern der verschiedensten Art, Metallfäden sowie während des Verweilens in der Schmelze der Polycarbonate stabile und die Polycarbonate nicht merklich schädigende Fasern.

Die Benzinbeständigkeit der Polycarbonat-Formmassen wird durch Lagerung der entsprechenden Formkörper, z.B. Normkleinstäbe, die

unter einer definierten Spannung stehen, die durch eine bestimmte Dehnung vorgegeben ist, in Testmedien geprüft. Als Testmedium wird eine Mischung aus Toluol/Isooctan im Volumenverhältnis von 1:1 verwendet. Die Probekörper, die eine Randfaserdehnung von 0,6% aufweisen, werden im Testmedium eine Stunde gelagert. Anschliessend werden die Produkte visuell hinsichtlich Bruch, Rissbildung und Verfärbung beurteilt.

Die folgenden Beispiele sollen den Erfindungsgegenstand näher erläutern. Die angegebenen relativen Lösungsviskositäten werden in Methylenchlorid bei 25 °C und einer Konzentration von 5 g/l gemessen.

Vergleichsbeispiel 1

Herstellung eines verzweigten Copolycarbonats aus Bisphenol A und 4,4'-Dihydroxydiphenylensulfon (Molverhältnis 80:20) durch gemeinsame Phosgenierung in der Phasengrenzfläche.

2,554 kg Bisphenol A, 0,701 kg 4,4'-Dihydroxydiphenylensulfon, 24,2 g Isatinbiskresol, 42,2 g Phenol, 3 kg 45%iger Natronlauge, 35 kg Wasser und 36,2 kg Methylenchlorid werden in einen 100 l Kessel gegeben. Es wird mit Stickstoff gespült. Danach werden bei Raumtemperatur 2,22 kg Phosgen innerhalb einer Stunde eingeleitet, wobei der pH-Wert durch Zugabe von 45%iger NaOH auf 12–13 gehalten wird. Nach Zugabe von 8,5 g Triethylamin wird noch 15 Minuten nachgerührt.

Das Produkt wird in einen Separator gegeben, wo aufgrund von Emulsionsbildung nur eine unvollständige Phasentrennung auftritt. Die organische Phase wird, so weit möglich, abgetrennt, mit Phosphorsäure angesäuert und mehrmals mit destilliertem Wasser gewaschen. Auch im sauren und im neutralen Medium erfolgt nur eine unvollständige Phasentrennung. Das so gewonnene Polycarbonat wird extrudiert und granuliert. Die Ausbeute und Eigenschaften des Produkts sind in der Tabelle angegeben.

Vergleichsbeispiel 2

Herstellung eines unverzweigten Copolycarbonats aus Bisphenol A und 4,4'-Dihydroxydiphenylsulfon (Molverhältnis 65–35) durch gemeinsame Phosgenierung in der Phasengrenzfläche.

Die Arbeitsweise erfolgt analog zu Beispiel 1, wobei 2,078 kg Bisphenol A, 1,226 kg 4,4'-Dihydroxydiphenylensulfon und 45,2 g p-tert.-Butylphenol eingesetzt werden. Auch hier ergeben sich erhebliche Trennprobleme im alkalischen, sauren und im neutralen Medium. Die Ausbeute und Eigenschaften des Produktes sind in der Tabelle angegeben.

Beispiel 3

Herstellung eines verzweigten Copolycarbonats aus Bisphenol A und 4,4'-Dihydroxydiphenylsulfon (Molverhältnis 80:20) durch Zugabe von 4,4'-Dihydroxydiphenylsulfon zum Vorphosgenat von Bisphenol A.

2,554 kg Bisphenol A, 24,2 g Isatinbiskresol, 42,2 g Phenol, 31,9 g Triethylbenzylammoniumchlorid, 2,4 kg 45%iger Natronlauge, 27,7 l Wasser und 36,2 kg Methylenchlorid werden in einem 100 l Kessel gegeben. Es wird mit Stickstoff gespült. Danach werden bei Raumtemperatur innerhalb von 1,5 Stunden 4,4 kg Phosgen eingeleitet, wobei der pH-Wert durch Zugabe von 45%iger NaOH auf 12 gehalten wird. Danach wird eine Lösung von 0,701 kg 4,4'-Dihydroxydiphenylensulfon in 1,035 kg 45%iger Natronlauge und 12,1 l Wasser zugepumpt. Nach Zugabe von 8,5 g Triethylamin wird noch 15 Minuten nachgerührt. Das Produkt wird in einen Separator gegeben. Die Phasen lassen sich problemlos trennen, ohne dass Emulsionsbildung auftritt. Die organische Phase wird abgetrennt, mit Phosphorsäure angesäuert und mehrmals mit destilliertem Wasser gewaschen. Auch im sauren und im neutralen Medium findet eine vollständige und problemlose Phasentrennung statt. Das so gewonnene Polycarbonat wird extrudiert und granuliert. Die Ausbeute und Eigenschaften sind in der Tabelle angegeben.

Beispiel 4

Herstellung eines unverzweigten Copolycarbonats aus Bisphenol A und 4,4'-Dihydroxydiphenylensulfon (Molverhältnis 65:35) durch Zugabe von 4,4'-Dihydroxydiphenylensulfon zum Bischlorkohlensäureester von Bisphenol A.

2,755 kg Bisphenol A-Bischlorkohlensäureester, 31,4 kg Methylenchlorid, 19,3 l Wasser und 38,7 l p-tert-Butylphenol werden in einen 100 l Kessel gegeben. Es wird mit Stickstoff gespült. Danach wird eine Lösung von 1,051 kg Dihydroxydiphenylensulfon in 0,887 kg 45%iger Natronlauge und 10,4 l Wasser zugepumpt. Nach Zugabe von 7,3 g Triethylamin wird 15 min. nachgerührt. Dabei wird durch Zugabe von 45%iger Natronlauge ein pH-Wert von 12 eingehalten.

Das Produkt wird in einen Separator gegeben. Die Phasen lassen sich problemlos trennen, ohne dass Emulsionsbildung auftritt. Die organische Phase wird abgetrennt, mit Phosphorsäure angesäuert und mehrmals mit destilliertem Wasser gewaschen. Auch im sauren und im neutralen Medium findet eine vollständige und problemlose Phasentrennung statt. Das so gewonnene Polycarbonat wird extrudiert und granuliert. Die Ausbeute und Eigenschaften sind in der Tabelle angegeben.

Vergleichsbeispiel gemäss US-PS 3 974 126:

Herstellung eines verzweigten Copolycarbonats aus Bisphenol A und 4,4'-Dihydroxydiphenylensulfon (Molverhältnis 80:20) durch Zugabe von 20 Molteilen Bisphenol A zum Vorphosgenat aus Bisphenol A und 4,4'-Dihydroxydiphenylsulfon.

Die Arbeitsweise erfolgt analog zu Beispiel 3, wobei 1,918 kg Bisphenol A und 0,701 kg 4,4'-Dihydroxydiphenylensulfon, vorphosgeniert werden. Zum Vorphosgenat wird eine Lösung aus 0,639 kg Bisphenol A und 12,1 l Wasser zugege-

ben. Auch hier ergeben sich erhebliche Trennprobleme im alkalischen, sauren und im neutralen Medium, sowie ein unvollständiger Einbau des 4,4'-Dihydroxydiphenylensulfons in Polycarbonat. Die Ausbeuten und Eigenschaften des Produktes sind in der Tabelle angegeben.

Tabelle 1

| | Ausbeute (%. d. Theorie) | η rel | S (% gef/theor.) | Vicat B (°C) | Kerbschlagzähigkeit kJ/m², Raumtemperatur |
|---|---|---|---|---|---|
| Beispiel 1 (Vergleichsbeispiel) | 55 | 1,30 | 1,8/2,5 | 160 | 43 |
| Beispiel 2 (Vergleichsbeispiel) | 46 | 1,25 | 2,8/4,3 | 165 | 36 |
| Beispiel 3 | 91 | 1,32 | 2,4/2,5 | 164 | 40 |
| Beispiel 4 | 93 | 1,28 | 4,1/4,3 | 173 | 33 |
| Vergleichsbeispiel | 60 | 1,31 | 1,7/2,5 | 159 | 42 |

**Patentanspruch**

1. Verfahren zur Isolierung von Polycarbonaten mit 18 bis 45 Mol-% an Struktureinheiten der Formel Ia

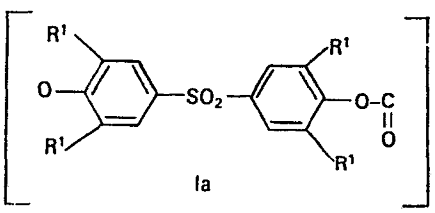

Ia

mit $R^1$ = H oder $C_1$–$C_3$-Alkyl, bezogen auf die Summe an Polycarbonatstruktureinheiten der Formeln I + Ia,

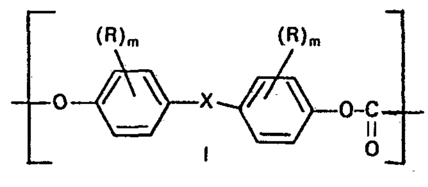

I

wobei in I

X eine Bindung, $C_1$–$C_8$-Alkylen, $C_2$–$C_8$-Alkyliden, Cyclohexylen, Cyclohexyliden, S, O der CO

R Wasserstoff, Chlor, Brom, Alkylsubstituenten mit 1 bis 3 C-Atomen,

m 0, 1, 2 bedeuten, indem man 18 bis 45 Mol-% Sulfonbisphenole der Formel IIa

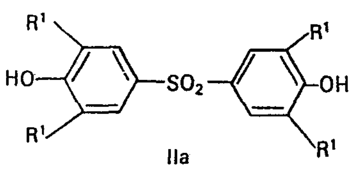

IIa

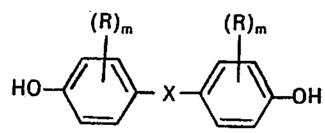

II

mit 82 bis 55 Mol-% an Bisphenolen der Formel II, bezogen jeweils auf die gesamte Molmenge der eingesetzten Bisphenole IIa + II, nach dem Phasengrenzflächenverfahren umsetzt, dadurch gekennzeichnet, dass man die Bisphenole der Formel II durch Phosgenierung im Phasengemisch aus wässriger alkalischer Phase und inerter organischer Phase zu einem Chlorkohlensäureesterendgruppen enthaltendem Oligocarbonat phosgeniert und anschliessend mit den Sulfonbisphenolen der Formel IIa unter Aminkatalyse polykondensiert, nach beendeter Polykondensation die Phasen in einem bekannten Scheidegefäss trennt und die organische Phase mit Phosphorsäure und Wasser in der üblichen Weise neutral wäscht, und nach abermaliger Trennung der Phasen die Sulfonbisphenolpolycarbonate durch Fällung oder Verdampfen des organischen Lösungsmittels isoliert.

**Revendication**

1. Procédé pour isoler des polycarbonates ayant 18 à 45 moles % de motifs structuraux de formule Ia

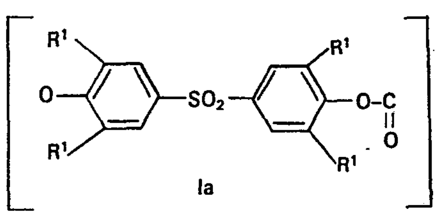

Ia

avec $R^1$ = H ou groupe alkyle en $C_1$ à $C_3$, par rapport à la somme de motifs structuraux polycarbonate des formules I + Ia

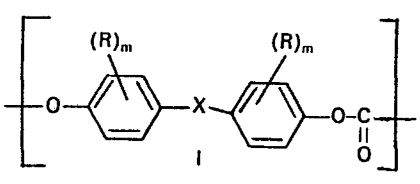

I

dans la formule I,

X désigne une liaison, un groupe alkylène en $C_1$ à $C_8$, alkylidène en $C_2$ à $C_8$, cyclohexylène, cyclohexylidène, S, O ou CO

R représente l'hydrogène, le chlore, le brome, des substituants alkyle ayant 1 à 3 atomes de carbone,

m a la valeur 0, 1 ou 2, en faisant réagir 18 à 45 moles % de sulfone-bisphénols de formule IIa

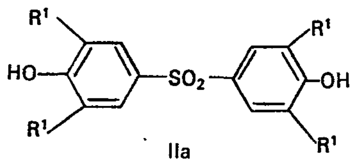
IIa

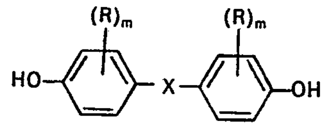
II

avec 82 à 55 moles % de bisphénole de formule II, dans chaque cas par rapport à la quantité molaire totale de bisphénole IIa + II utilisés, d'après le procédé à l'interface entre phases, caractérisé en ce qu'on phosgène les bisphénols de formule II, par phosgénation dans le mélange de phase alcaline aqueuse et de phase organique inerte, en un oligocarbonate contenant des groupes terminaux ester d'acide chlorocarbonique, puis on les polycondense avec les sulfone-bisphénols de formule IIa sous l'action catalytique d'une amine, une fois la polycondensation terminée, on sépare les phases dans un appareil connu de séparation et on lave la phase organique jusqu'à neutralité avec de l'acide phosphorique et de l'eau d'une manière classique, et après une nouvelle séparation des phases, on isole les polycarbonates de sulfone-bisphénols par précipitation ou par évaporation du solvant organique.

## Claim

1. Process for the isolation of polycarbonates containing 18 to 45 mol-% of structural units of the formula Ia

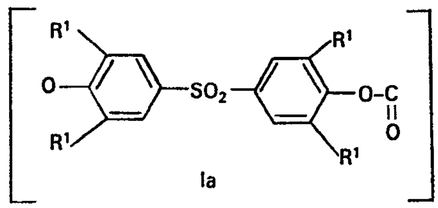
Ia

in which

$R^1$ = H or $C_1$–$C_3$-alkyl, relative to the sum of polycarbonate structural units of the formula I + Ia

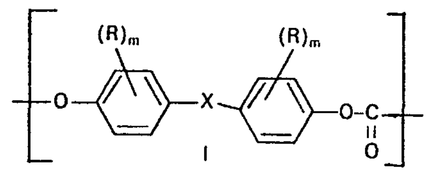
I

X denoting a bond, $C_1$–$C_8$-alkylene, $C_2$–$C_8$-alkylidene, cyclohexylene, cyclohexylidene, S, O or CO

R denoting hydrogen, chlorine, bromine or alkyl substituents having 1 to 3 C atoms and

m denoting 0, 1 or 2 in I, by reacting 18 to 45 mol-% of sulphone-bisphenols of the formula IIa

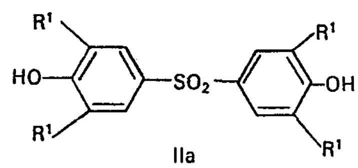
IIa

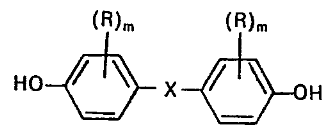
II

with 82 to 55 mol-% of bisphenols of the formula II, in each case relative to the total molar amount of the bisphenols IIa + II used, by the phase-boundary process, characterised in that the bisphenols of the formula II are phosgenated to give an oligocarbonate containing chloroformic acid ester end groups by phosgenation in a phase mixture of an aqueous alkaline phase and an inert organic phase, and the oligocarbonate is then subjected to a polycondensation reaction with the sulphone-bisphenols of the formula IIa using an amine catalyst, the phases are separated in a known separating vessel after the polycondensation has ended, and the organic phase is washed with phosphoric acid and water in the customary manner, until the washings are neutral, and, after further separation of the phases, the sulphone-bisphenol polycarbonates are isolated by precipitation or evaporation of the organic solvent.